# EUROPÄISCHE PATENTSCHRIFT

(11) **EP 2 255 088 B1**
(45) Veröffentlichungstag und Bekanntmachung des Hinweises auf die Patenterteilung: **09.11.2011**
(21) Anmeldenummer: 08734699.5
(22) Anmeldetag: 20.03.2008
(51) Int. Cl.: F03D 11/00, H02K 9/00

(54) **WINDENERGIEANLAGE UND VERFAHREN ZUM BETREIBEN EINER WINDENERGIEANLAGE**
WIND TURBINE AND METHOD FOR OPERATING A WIND TURBINE
INSTALLATION ÉOLIENNE ET PROCÉDÉ D'EXPLOITATION D'UNE INSTALLATION ÉOLIENNE

(43) Veröffentlichungstag der Anmeldung: 01.12.2010
(73) Patentinhaber: Powerwind Gmbh, 20537 Hamburg (DE)
(72) Erfinder: SCHLANGEN, Rainer, 48432 Rheine (DE); TEEGEN-LEHMANN, Martina, 22846 Norderstedt (DE); FEDDERN, Thomas, 22297 Hamburg (DE)
(74) Vertreter: Leinweber & Zimmermann
(86) Internationale Anmeldenummer: PCT/EP2008/002265
(87) Internationale Veröffentlichungsnummer: WO 2009/115100

(56) Entgegenhaltungen:
- EP-A- 1 081 376
- EP-A- 1 586 769
- WO-A-01/21956
- WO-A-01/77526
- DE-A1-102004 046 700

## Beschreibung

Die Erfindung betrifft eine Windenergieanlage mit einem sich im wesentlichen in Schwererichtung erstreckenden Turm, einer am oberen Ende des Turms angeordneten Gondel, an der ein bezüglich einer quer zur Schwererichtung verlaufenden Rotorachse drehbar gelagerter Rotor angeordnet ist, einem in der Gondel angeordneten und an den Rotor gekoppelten Generator und einer zum Kühlen des Generators ausgelegten Kühleinrichtung.

Bei einer üblichen Windenergieanlage wird die Rotordrehung in der an der Spitze des Turms angeordneten Rotorgondel mit Hilfe eines Generators in elektrische Energie umgesetzt. Dazu wird die Rotorachse ggf. über ein geeignetes Getriebe an den Generator gekoppelt. Moderne Windenergieanlagen mit einer Turmhöhe von mehr als 100 m und einem entsprechend großen Rotordurchmesser besitzen eine Nennleistung von mehreren MW. Entsprechend viel Wärme wird bei der Umwandlung der Windenergie in elektrische Energie innerhalb des Getriebes und des Generators erzeugt. Zur Vermeidung von Beschädigungen des Getriebes, des Generators oder nachgeordneter Anlagenteile, wie Frequenzumrichter und/oder Transformator, und zur fortwährenden Energieumwandlung müssen entsprechende Kühlvorrichtungen vorgesehen sein.

Bei herkömmlichen Windenergieanlagen umfassen die Kühlanlagen Lüfter, mit denen Außenluft angesaugt und in das Innere der Gondel geblasen wird. Allerdings werden beim Betrieb des Lüfters auch in der Luft vorhandener Staub, Feuchtigkeit und Regen mit angesaugt und in das Innere der Gondel transportiert, was zu Beschädigungen der zu kühlenden Anlagenteile führen kann. In diesem Zusammenhang wird beispielhaft auf die abrasive Wirkung von Staub oder Sand hingewiesen.

Zur Lösung dieser Probleme wird in der DE 10 2004 046 700 A1 eine Windenergieanlage mit innerhalb der Gondel angeordneten Lüftern vorgeschlagen, wobei mit den Lüftern Außenluft durch einen nach unten offenen Luftspalt zwischen Turm und Gondel angesaugt wird. Dadurch soll erreicht werden, daß allenfalls noch sehr feine Partikel mit angesaugt werden, die entgegen der Schwerkraftwirkung von dem Luftstrom nach oben getragen werden können. Allerdings wird auch bei diesen bekannten Windenergieanlagen ein starker Verschleiß der zu kühlenden Anlagenteile beobachtet.

Angesichts dieser Probleme im Stand der Technik liegt der Erfindung die Aufgabe zugrunde, eine Windenergieanlage bereitzustellen, die eine hohe Betriebszuverlässigkeit aufweist und auch bei sehr hohen Außentemperaturen betrieben werden kann.

Erfindungsgemäß wird diese Aufgabe durch die in Patentanspruch 1 beschriebene Weiterbildung der bekannten Windenergieanlage gelöst.

Diese Lösung geht auf die Erkenntnis zurück, daß auch bei den beispielsweise in der DE 10 2004 046 700 A1 beschriebenen Windenergieanlagen noch sehr viel Feinstaub und andere Verschmutzungen in den Bereich des Generators gelangen und so einen erhöhten Verschleiß verursachen.

Bei der erfindungsgemäßen Windenergieanlage wird die Kühlung hingegen indirekt mit Hilfe eines geeigneten Wärmetauschers bewirkt. Dadurch kann erreicht werden, daß die Außenluft zu Kühlzwecken den Generator und/oder andere Anlagenteile überhaupt nicht belastet, sondern nur auf den verschleißfesten Wärmetauscher trifft, mit dem die Kühlleistung indirekt an die zu kühlenden Anlagenteile übertragen wird.

Gleichzeitig wird durch die nach unten offene Zuführöffnung erreicht, daß allenfalls noch sehr feine Partikel mit angesaugt werden, die entgegen der Schwerkraftwirkung von dem Luftstrom nach oben getragen werden können.

Zur weiteren Verbesserung der Betriebszuverlässigkeit erfindungsgemäßer Windenergieanlagen hat es sich als zweckmäßig erwiesen, wenn zwischen dem Wärmetauscher und dem Generator eine einer Luftströmung von Wärmetauscher in Richtung auf den Generator entgegenwirkende Trenneinrichtung vorgesehen ist, wodurch der Übergang von ggf. mit Verunreinigungen beladener Kühlluft zum Generator erschwert wird.

Ferner hat es sich im Rahmen der Erfindung als besonders zweckmäßig erwiesen, wenn der Wärmetauscher innerhalb der Gondel unterhalb des Generators, insbes in der unteren Hälfte der Gondel, besonders bevorzugt etwa am tiefsten Punkt der Gondel, angeordnet ist, weil die zugeführte Frischluft bei dieser Anordnung direkt den Wärmetauscher erreicht und nicht in der Gondel erwärmt wird.

Der Wärmetauscher erfindungsgemäßer Windenergieanlagen arbeitet mit von außen zugeführter Kühlluft als Kühlmittel, wobei im Bereich der Gondel mindestens eine Zuführöffnung zur Zuführung von Kühlluft in Richtung auf den Wärmetauscher vorgesehen ist. Dabei kann mindestens eine Zuführöffnung zwischen dem Turm und der Gondel angeordnet sein. Dies ist ein sehr günstiger Ort für die Zufuhr von Frischluft, da die Luftströmung an den beiden Seiten des Turms eine Geschwindigkeitszunahme erfährt. Ferner ist ein Regenschutz gewährleistet und der Anteil an Partikeln in der Luft reduziert, wodurch die Belastung des Wärmetauschers mit Verschmutzungen reduziert werden kann. Zusätzlich oder alternativ kann mindestens eine Zuführöffnung in einer Gondelwand, insbes in Richtung der Rotorachse, vor dem Turm angeordnet sein.

Zur Ableitung der Kühlluft nach Passieren des Wärmetauschers weist eine erfindungsgemäße Windenergieanlage zweckmäßigerweise mindestens eine Auslaßöffnung für die über die Zuführöffnung zugeführte Kühlluft auf. Dabei kann mindestens eine Auslaßöffnung in einem sich in Richtung der Rotorachse verjüngenden Bereich der Gondel angeordnet sein. Diese Anordnung ist im Hinblick auf die Außenströmung besonders günstig, weil die Geschwindigkeitsabnahme der Außenströmung in dem sich verjüngenden Bereich der Gondel die Abfuhr der Luft erleichtert und andererseits der Unterdruck in diesem Bereich außerhalb der Gondel die Luftabfuhr begünstigt.

Wie vorstehend bereits angesprochen, ist der Rotor zweckmäßigerweise über ein Getriebe an den Generator gekoppelt, wobei das Getriebe vorzugsweise mit der Kühleinrichtung kühlbar ist. Zusätzlich kann ein vorzugsweise mit der Kühleinrichtung kühlbarer Frequenzumrichter und/oder Transformator in der Gondel vorgesehen sein.

Ein erfindungsgemäßes Verfahren zum Betreiben einer Windenergieanlage ist im wesentlichen dadurch gekennzeichnet, daß ein in der Gondel der Windenergieanlage angeordneter Generator mit Hilfe eines Wärmetauschers gekühlt wird, dem durch eine zwischen der Gondel und dem Turm angeordnete Zuführöffnung Frischluft zugeführt wird, die in einem sich verjüngenden Bereich der Gondel durch entsprechende Auslaßöffnungen abgeleitet werden kann, wobei eine Trenneinrichtung vorgesehen sein kann, um so einer Luftströmung der zugeführten Frischluft in Richtung auf den Generator entgegenzuwirken und zweckmäßigerweise eine Art Luftkanal zwischen Zuführöffnung und Auslaßöffnung zu bilden, indem die zugeführte Frischluft den Wärmetauscher passiert.

Nachstehend wird die Erfindung unter Bezugnahme auf die Zeichnung, auf die hinsichtlich aller erfindungswesentlichen und in der Beschreibung nicht näher herausgearbeiteten Einzelheiten ausdrücklich verwiesen wird, erläutert. In der Zeichnung zeigt:
- **Fig. 1**: eine teilweise geschnittene Seitenansicht der Gondel einer erfindungsgemäßen Windenergieanlage und
- **Fig. 2**: eine Ansicht der in Fig. 1 dargestellten Gondel von unten.

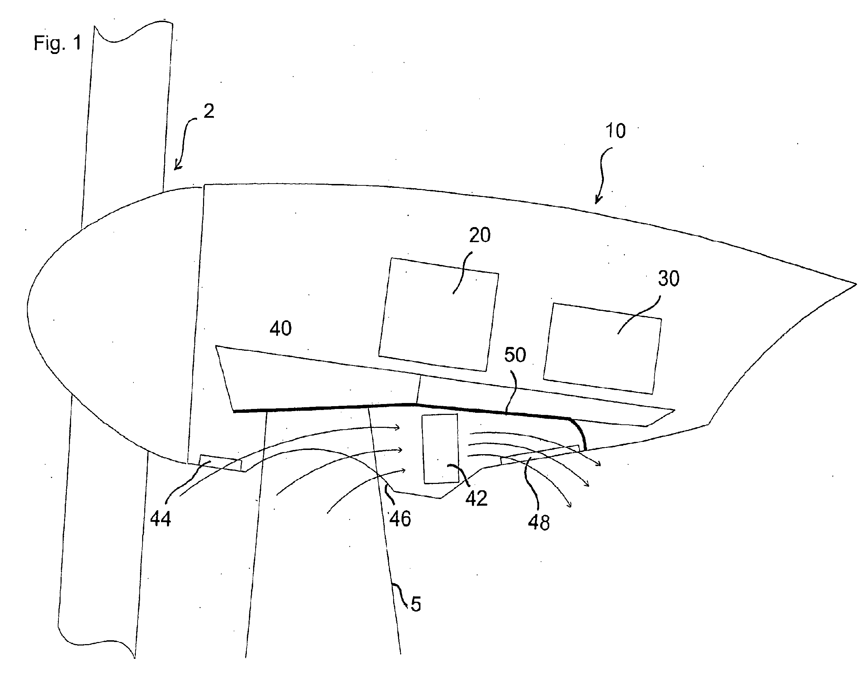

Wie besonders deutlich in Fig. 1 zu erkennen ist, sind in einem oberen Bereich der Gondel 10 ein Getriebe 20 und ein Generator 30 angeordnet, wobei ein Rotor 2 der Windenergieanlage über das Getriebe 20 an den Generator 30 gekoppelt werden kann. Das Getriebe 20 und der Generator 30 sind auf einem Maschinenträger 40 angebracht, unter dem etwa im tiefsten Punkt der Gondel 10 zwei Wärmetauscher 42 angeordnet sind, von denen in der Zeichnung nur einer dargestellt ist. Den Wärmetauschern 42 wird über nach unten offene Zuführöffnungen 44, 46 Frischluft von außen zugeführt, die durch Auslaßöffnungen 48 in dem sich in Richtung der Rotorachse verjüngenden hinteren Bereich der Gondel 10 nach Passieren der Wärmetauscher 42 wieder aus der Gondel 10 abgeleitet wird, wobei die Luftströmung durch eine Leiteinrichtung 50 so geführt wird, daß sie den oberen Bereich der Gondel 10, in dem das Getriebe 20 und der Generator 30 angeordnet sind, nicht erreicht.

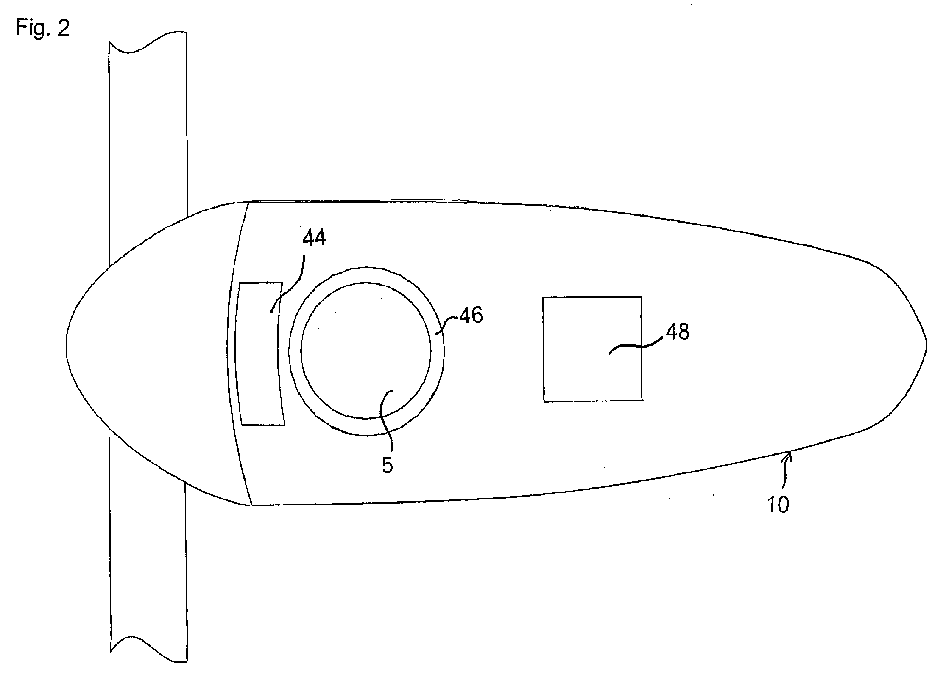

Wie den Fig. 1 und 2 zu entnehmen ist, ist die Zuführöffnung 44 der in der Zeichnung dargestellten Windenergieanlage zwischen dem Turm 5 und dem Rotor 2 der Windenergieanlage innerhalb der unteren Begrenzungsfläche der Gondel 10 angeordnet. Die Zuführöffnung 46 ist ebenfalls im unteren Bereich der Gondel 10 angeordnet und in Form eines Ringspaltes (vgl. Fig. 2) zwischen der Gondel 10 und dem Turm 5 verwirklicht. Durch die Anordnung der Zuführöffnungen 44 und 46 im unteren Bereich der Gondel 10 ist ein Regenschutz verwirklicht. Ferner können durch diese Anordnung Belastungen der Wärmetauscher 42 mit in der Außenluft enthaltenen Verschmutzungen reduziert werden, weil die Verschmutzungen allenfalls entgegen der Schwerkraftwirkung mit der Luftströmung in den Bereich der Wärmetauscher 42 gelangen können, so daß grobe Verunreinigungen nicht in Kontakt mit den Wärmetauschern 42 kommen. Die Leiteinrichtung 50 ist bei der in der Zeichnung dargestellten Ausführungsform der Erfindung in Form einer Abdeckplane verwirklicht, mit der die durch die Zuführöffnungen 44 und 46 in Richtung auf die Auslaßöffnungen 48 strömende Luft im unteren Bereich der Gondel 10 gehalten werden kann, um so einen direkten Kontakt zwischen der zugeführten Luft und dem Getriebe 20 bzw. Generator 30 zu vermeiden. Dadurch wird die Betriebszuverlässigkeit einer erfindungsgemäßen Windenergieanlage deutlich erhöht und der Betrieb auch bei sehr hohen Außentemperaturen sichergestellt.

Die Installation der Wärmetauscher am tiefsten Punkt der Gondel bietet den zusätzlichen Vorteil, daß in Fall einer Leckage Öl und Kühlwasser direkt unter den Kühlern aufgefangen werden können.

Die Erfindung ist nicht auf die anhand der Zeichnung erläuterte Ausführungsform beschränkt. Vielmehr ist auch an den Einsatz erfindungsgemäßer Kühleinrichtungen im Zusammenhang mit getriebelos arbeitenden Windenergieanlagen gedacht. Ferner können drei oder mehr Wärmetauscher ebenso zum Einsatz kommen wie nur ein Wärmetauscher.

## Patentansprüche

1. Windenergieanlage mit einem sich im wesentlichen in Schwererichtung erstreckenden Turm, einer am oberen Ende des Turms angeordneten Gondel (10), an der ein bezüglich einer quer zur Schwererichtung verlaufenden Rotorachse drehbar gelagerter Rotor angeordnet ist, einem in der Gondel (10) angeordneten und an den Rotor gekoppelten Generator (30) und einer zum Kühlen des Generators (30) ausgelegten Kühleinrichtung, wobei die Kühleinrichtung einen räumlich vom Generator (30) getrennten Wärmetauscher (42) aufweist, **gekennzeichnet durch** mindestens eine nach unten offene Zuführöffnung zur Zuführung von Kühlluft in Richtung auf den Wärmetauscher (42).

2. Windenergieanlage nach Anspruch 1, **gekennzeichnet durch** eine zwischen dem Wärmetausche (42) und dem Generator (30) angeordnete und einer Luftströmung vom Wärmetauscher (42) in Richtung auf den Generator (30) entgegenwirkende Trenneinrichtung (40).

3. Windenergieanlage nach Anspruch 1 oder 2, **dadurch gekennzeichnet, dass** der Wärmetauscher (42) innerhalb der Gondel (10) unterhalb des Generators (30), insbes in der unteren Hälfte der Gondel (10), besonders bevorzugt etwa am tiefsten Punkt der Gondel (10), angeordnet ist.

4. Windenergieanlage nach einem der vorhergehenden Ansprüche, **dadurch gekennzeichnet, dass** mindestens eine Zuführöffnung zwischen dem Turm und der Gondel (10) angeordnet ist.

5. Windenergieanlage nach einem der vorhergehenden Ansprüche, **dadurch gekennzeichnet, dass** mindestens eine Zuführöffnung in einer Gondelwand, insbes in Richtung der Rotorachse, vor dem Turm angeordnet ist.

6. Windenergieanlage nach einem der vorhergehenden Ansprüche, **gekennzeichnet durch** mindestens eine Auslaßöffnung (48) für die über die Zuführöffnung zugeführte Kühlluft.

7. Windenergieanlage nach Anspruch 6, **dadurch gekennzeichnet, dass** mindestens eine Auslaßöffnung (48) in einem sich in Richtung der Rotorachse verjüngenden Bereich der Gondel (10) angeordnet ist.

8. Windenergieanlage nach einem der vorhergehenden Ansprüche, **dadurch gekennzeichnet, dass** der Rotor über ein Getriebe (20) an den Generator (30) gekoppelt ist und das Getriebe (20) vorzugsweise mit der Kühleinrichtung kühlbar ist.

9. Windenergieanlage nach einem der vorhergehenden Ansprüche, **gekennzeichnet durch** mindestens einen vorzugsweise mit der Kühleinrichtung kühlbaren Frequenzumrichter und/oder Transformator.

10. Verfahren zum Betreiben einer Windenergieanlage nach einem der vorhergehenden Ansprüche.

## Claims

1. A wind turbine comprising a tower extending substantially in the direction of gravity, a gondola (10) positioned at the upper end of the tower on which a rotor is positioned, mounted rotatably in relation to a rotor axis running laterally to the direction of gravity, a generator (30) positioned in the gondola (10) and coupled to the rotor, and a cooling device designed to cool the generator (30), the cooling device having a heat exchanger (42) spatially separated from the generator (30), **characterised by** at least one delivery opening open to the bottom for the delivery of cooling air in the direction of the heat exchanger (42).

2. The wind turbine according to Claim 1, **characterised by** a separating device (40) disposed between the heat exchanger (42) and the generator (30) and counteracting an airflow from the heat exchanger (42) towards the generator (30).

3. The wind turbine according to Claim 1 or 2, **c**haracterised in that the heat exchanger (42) is positioned within the gondola (10) beneath the generator (30), in particular in the lower half of the gondola (10), particularly preferably at approximately the lowest point of the gondola (10).

4. The wind turbine according to any of the preceding claims, **characterised in that** at least one delivery opening is positioned between the tower and the gondola (10).

5. The wind turbine according to any of the preceding claims, **characterised in that** at least one delivery opening is positioned in a gondola wall, in particular in the direction of the rotor axis, in front of the tower.

6. The wind turbine according to any of the preceding claims, **characterised by** at least one outlet opening (48) for the cooling air delivered via the delivery opening.

7. The wind turbine according to Claim 6, **characterised in that** at least one outlet opening (48) is positioned in a region of the gondola (10) tapering towards the rotor axis.

8. The wind turbine according to any of the preceding claims, **characterised in that** the rotor is coupled via a gear mechanism (20) to the generator (30), and the gear mechanism (20) can preferably be cooled with the cooling device.

9. The wind turbine according to any of the preceding claims, **characterised by** at least one frequency converter that can preferably be cooled with the cooling device and/or a transformer.

10. A method for operating a wind turbine according to any of the preceding claims.

## Revendications

1. Installation éolienne comportant un mât s'étendant sensiblement dans le sens de la gravité, une nacelle (10) disposée à l'extrémité supérieure du mât et sur laquelle un rotor est monté rotatif autour d'un axe de rotor orienté transversalement au sens de la gravité, un générateur (30) monté dans la nacelle (10) et couplé au rotor, et un dispositif de refroidissement conçu pour le refroidissement du générateur (30), le dispositif de refroidissement présentant un échangeur de chaleur (42) spatialement séparé du générateur (30), **caractérisée par** au moins une ouverture d'amenée ouverte vers le bas destinée à l'amenée d'air de refroidissement en direction de l'échangeur de chaleur (42).

2. Installation éolienne selon la revendication 1, **caractérisée par** un dispositif de séparation (40) installé entre l'échangeur de chaleur (42) et le générateur (30) et agissant à l'encontre d'un courant d'air provenant de l'échangeur de chaleur (42) et dirigé vers le générateur (30).

3. Installation éolienne selon la revendication 1 ou 2, **caractérisée en ce que** l'échangeur de chaleur (42) est situé à l'intérieur de la nacelle (10) en dessous du générateur (30), notamment dans la moitié inférieure de la nacelle (10), tout particulièrement au point quelque peu le plus profond de la nacelle (10).

4. Installation éolienne selon l'une des revendications précédentes, **caractérisée en ce qu'**il est prévu au moins une ouverture d'amenée entre le mât et la nacelle (10).

5. Installation éolienne selon l'une des revendications précédentes, **caractérisée en ce qu'**il est prévu au moins une ouverture d'amenée dans une paroi de la nacelle, notamment dans la direction de l'axe de rotor, avant le mât.

6. Installation éolienne selon l'une des revendications précédentes, **caractérisée par** au moins une ouverture d'échappement (48) destinée à l'air de refroidissement amené par l'ouverture d'amenée.

7. Installation éolienne selon la revendication 6, **caractérisée en ce qu'**il est prévu au moins une ouverture d'échappement (48) dans une zone de la nacelle (10) qui se réduit en direction de l'axe de rotor.

8. Installation éolienne selon l'une des revendications précédentes, **caractérisée en ce que** le rotor est couplé au générateur (30) par le biais d'un engrenage (20) et **en ce que** l'engrenage (20) est de préférence susceptible d'être refroidi au moyen du dispositif de refroidissement.

9. Installation éolienne selon l'une des revendications précédentes, **caractérisée par** au moins un convertisseur de fréquence et/ou un transformateur de préférence susceptible d'être refroidi au moyen du dispositif de refroidissement.

10. Procédé d'exploitation d'une installation éolienne selon l'une des revendications précédentes.
